# EUROPEAN PATENT SPECIFICATION

(11) **EP 0 683 863 B1**
(45) Date of publication and mention of the grant of the patent: **09.09.1998**
(21) Application number: 94907012.2
(22) Date of filing: 02.02.1994
(51) Int. Cl.: F04B 33/00, B62J 11/02, B60C 29/06

(54) **A BICYCLE PUMP**
FAHRRADPUMPE
POMPE A BICYCLETTE

(30) Priority: 12.02.1993 NL 9300278
(43) Date of publication of application: 29.11.1995
(60) Divisional application: 98200517.5
(73) Proprietor: Spanninga Metaal B.V., NL-8501 MK Joure (NL)
(72) Inventor: HOSPER, Alle, NL-8512 AD Broek (NL)
(74) Representative: Fieret, Johannes, Ir.
(86) International application number: NL9400025
(87) International publication number: WO9418452

(56) References cited:
- BE-A- 371 431
- BE-A- 403 713
- BE-A- 503 697
- CH-A- 236 906
- CH-A- 261 549
- DE-C- 387 672
- FR-A- 421 368
- FR-U- 2 091 718

## Description

The invention relates to a bicycle pump provided with an elongated pump housing, with a pump piston positioned within the pump housing, which is secured to a hollow piston rod, and with a handle cooperating with said piston, said handle is adjustable connected to the hollow piston rod in such a manner, that in a first position for operating the pump said handle extends transversely to the hollow piston rod near the end of the hollow piston rod remote from the piston, and that in a second position said handle extends coaxially with the hollow piston rod.

Such a bicycle pump is known from CH-236906. By said bicycle pump the handle surrounds the pump casing in the stored position. This makes the bicycle pump relatively bulky.

It is an object of the invention to provide a bicycle pump which is relatively compact so that it is easier to transport on an bicycle.

This object is achieved by the bicycle pump according to the invention in that in said second position said handle is accomodated within the hollow pistion rod at least along part of its length.

When the construction according to the invention is used it is possible to carry out an effective pumping action by means of the handle extending transversely to the piston rod when it is desired to use the pump, whilst the pump, when not in use, forms a compact unit without any impeding projections because the handle is at least partially accomodated within the hollow piston rod, so that the pump can readily be taken along the on the bicycle.

It has to be noted that with another conventional bicycle pump a handle extending transversely to the piston rod is usually secured to the end of the piston rod projecting from the pump housing. Such bicycle pump provided with a handle which is fixedly connected to the piston rod are less suitable for being taken along on the bicycle. In connection therewith pumps have been developed with a handle concentrically surrounding the piston rod, which handle concentrically surrounds the pump housing in the telescoped position. With such a construction it is difficult, however, to exert the force required for inflating a tyre on the piston rod.

The invention will be explained in more detail hereafter with reference to an embodiment of the construction according to the invention illustrated in the accompanying figures.

Figure 1 is a schematic perspective view of a part of the frame of a bicycle and a bicycle pump coupled to said bicycle.

Figure 2 is a plan view of the annular means, by which the bicycle pump is secured to the frame.

Figure 3 is a sectional view of a part of the pump housing, with a piston and a piston rod accommodated therein.

Figure 4 is a perspective view of a part of the upper end of the piston rod and a part of a handle coupled to said piston rod, shown in spaced-apart relationship.

Figure 5 shows a part of the piston rod of the bicycle pump with a handle coupled thereto.

Figure 6 is a plan view of figure 5.

Figure 7 shows a part of the piston rod of the bicycle pump and a part of the handle in a position which is changed with respect to figure 5.

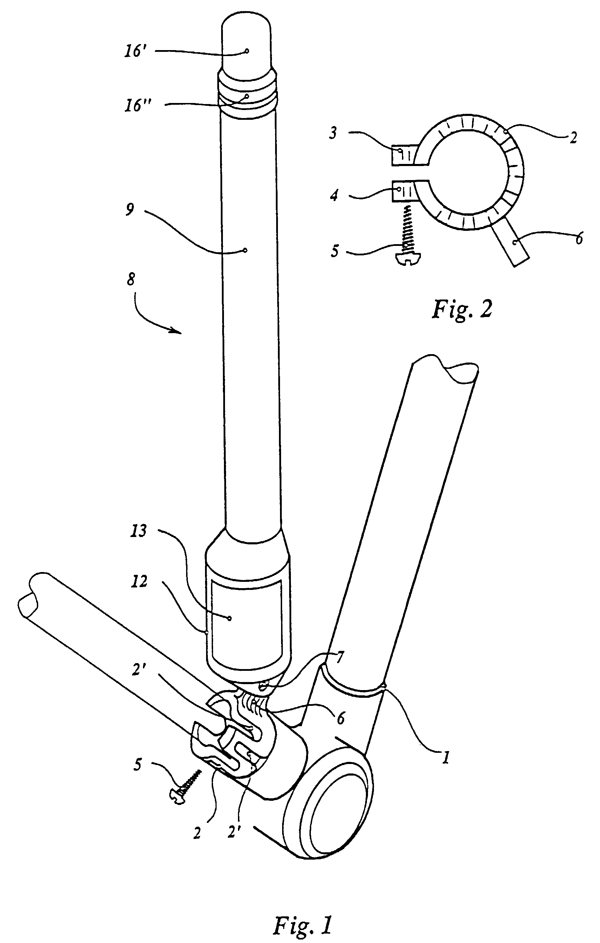

Figure 1 diagrammatically shows a part of a frame 1 of a bicycle, near the connection of two frame tubes to the crankshaft housing.

A split clamping ring 2 made of a slightly resilient material is provided around one of the frame tubes, which clamping ring may be clamped down on the frame tube by means of a tightening screw 5 to be passed through two ears 3 and 4 of the clamping ring. In the clamping ring slits 2', extending in the longitudinal direction of the clamping ring 2 are alternately provided in opposite ends of said clamping ring, said slits assisting in the spring action of the clamping ring 2. The clamping ring may thereby be provided around frame tubes having different diameters, in such a manner that in mounted condition the clamping ring is still rotatable with respect to the frame tube when a certain frictional force is overcome.

The clamping ring 2 is provided with another projecting ear 6, to which the bottom end of a bicycle pump 8 is pivotally coupled by means of a pin 7 extending perpendicularly to the longitudinal direction of the frame tube.

As already said before the clamping ring 2 is provided in such a manner, that said clamping ring is rotatable about the frame tube in question, so that when it is desired to use the bicycle pump it may be pivoted into a desired position with respect to the frame tube, in order to make it possible to inflate the bicycle tyres without difficulty, whilst the forces exerted during pumping are directly transmitted to the bicycle frame thereby.

When not in use the bicycle pump may be secured near its upper end in a manner which is usual for pumps to be taken along on the bicycle.

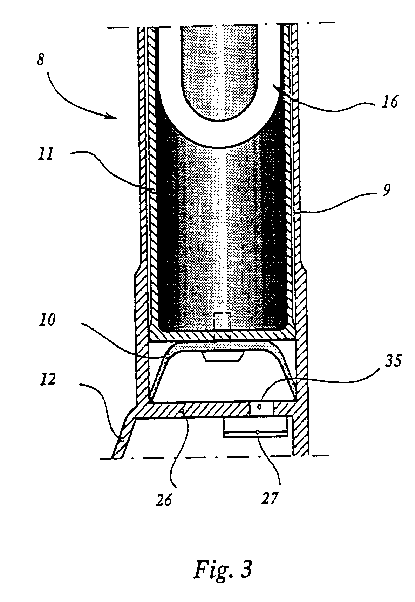

The pump 8 comprises a cyclindrical pump housing 9, in which a piston 10 is movable to and fro by means of a piston rod made up of a hollow tube 11 positioned within the pump housing 9 (figure 3).

A chamber 12 having a larger diameter than the pump cylinder 9 is provided at the bottom end of the pump housing or pump cylinder 9, which chamber is provided with an opening which can be closed by means of a cover 13, as is diagrammatically indicated in figure 1.

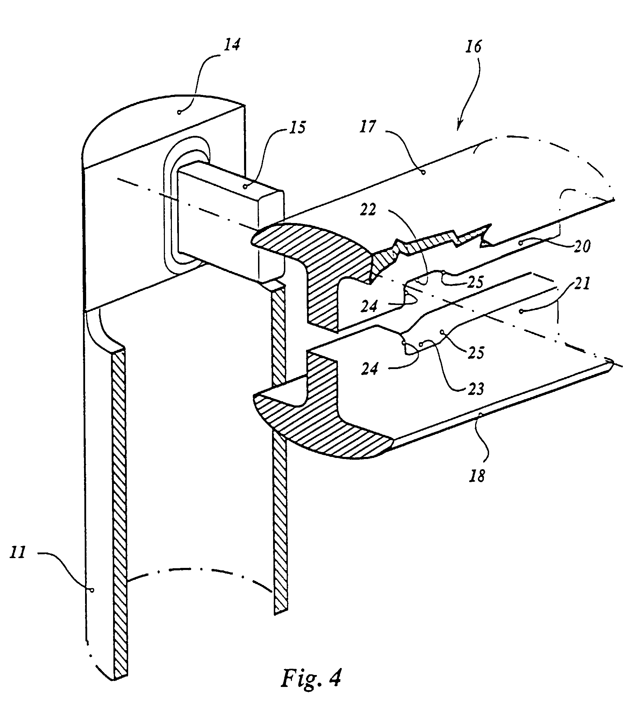

Near its upper end the tubular piston rod 11 is provided with two opposed projecting ears 14 (figures 4 - 7), which support a pin 15 extending between said ears, transversely to the longitudinal direction of the hollow piston rod 11. A handle 16 is coupled to the upper end of said hollow piston rod 11 by means of said pin 15.

The handle 16 is substantially built up of two elongated parts 17 and 18 extending parallel to each other, which are interconnected near their ends by curved connecting parts 19. The elongated parts are provided with ribs 20 and 21 at their facing sides, the height of said ribs gradually increasing towards the centre of the handle.

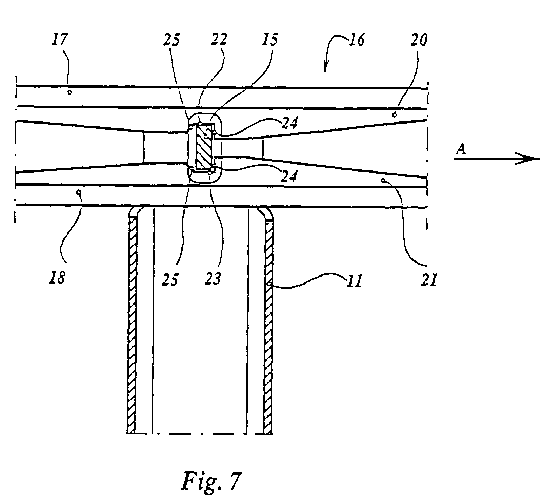

Near the centre of the handle opposed recesses 22 and 23 respectively are provided in said ribs, which, as will be apparant from figure 7, are bounded on one side by boundary surfaces 24 extending perpendicularly to the longitudinal direction of the handle 16 and on the other side by sloping boundary surfaces 25. Near the boundary surfaces 25 the distance between the ribs 20 and 21 is thereby larger than near the boundary surfaces 24.

In the position illustrated in figure 7 the handle 16 extends perpendicularly to the hollow piston rod 11, whereby the pin 15 is positioned within the recesses 22 and 23 and the handle projects substantially the same distance on both sides of the hollow piston rod 11. The handle may thus be gripped with both hands so as to move the piston rod 11 to and fro when using the pump.

The elongated part 17 has thereby been forced slightly upwards by the pin 15 under elastic deformation, as a result of which the part 17 is pressed against the upper end of the hollow piston rod 1, so that a connection which is free from play is ensured between the handle 16 and the piston rod 11 during pumping.

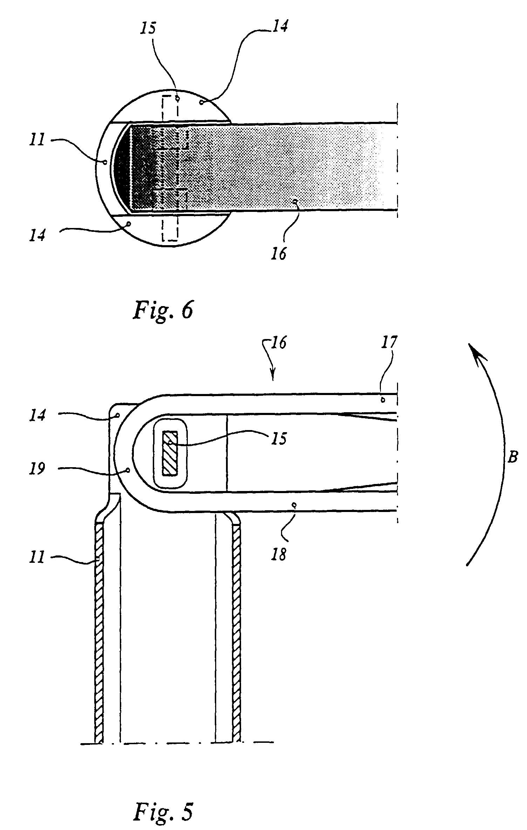

The handle may be moved with respect to the hollow piston rod 11, from the operating position shown in figure 7 in the direction according to the arrow A, whereby the two parts 17 and 18 will be forced apart slightly resiliently by the upper side of the pin 15, in order to move the pin 15 out of the recesses 22 and 23. This movement of the handle 16 with respect to the hollow piston rod 11 and in particular with respect to the pin 15 secured to the piston rod 11, which is to be forced out of the recesses 22 and 23, is facilitated by the tapered configuration of the boundary walls 25 of the openings 22 and 23. By moving the handle 16 in the direction according to the arrow A said handle may be brought to the position shown in figures 5 and 6, wherein one end 19 of the handle 16 has reached a position near the pin 15. From this position the handle may be turned through 90° in the direction according to the arrow B, and then be pushed into the hollow piston rod 11, in such a manner that the handle is accommodated within the hollow piston rod 11.

A sealing cap 16' (figure 1) secured to one end of the handle thereby joins the upper end of the pump cylinder 9 and engages around said upper end of the pump cylinder 9 with a flange 16", in order to effect a drip water-tight sealing of the pump cylinder 9 when the pump is not in use.

## Claims

1. A bicycle pump (8) provided with an elongated pump housing (9), with a pump piston (10) positioned within the pump housing (9), which is secured to a hollow piston rod (11), and with a handle (16) cooperating with said piston (11), said handle (16), is adjustable connected to the hollow piston rod (11) in such a manner, that in a first position for operating the pump (8) said handle (16) extends transversely to the hollow piston rod (11) near the end of the hollow piston rod (11) remote from the piston (10), and that in a second position said handle (16) extends coaxially with the hollow piston rod (11), characterized in that in said second position said handle (16) is accomodated within the hollow piston rod (11) at least along part of its length.

2. A bicycle pump according to claim 1, characterized in that a recess (22, 23) extending in the longitudinal direction of the handle (16) is provided in said handle (16), through which recess a pin (15) secured to the upper end of said hollow piston rod (11) is passed, in such a manner that the handle (16) is connected to the piston rod (11) by means of said pin (15) so as to be movable in its longitudinal direction, whilst the handle (16) can be pivoted about the pin (15) with respect to the piston rod (11) when said pin (15) is located near one end of said recess (22, 23).

3. A bicycle pump according to claim 2, characterized in that opposed ribs (20, 21) are provided within said recess (22, 23), the distance between said ribs (20, 21) gradually decreasing towards the centre of said handle (16), whilst recesses (22, 23) for receiving the pin (15) are provided in said ribs (20, 21), near the centre of the handle (16), the construction being such that when the pin (15) is moved towards the centre of the handle (16) said ribs (20, 21) are forced apart a little.

4. A bicycle pump according to claim 3, characterized in that the recesses (22, 23) provided in said ribs (20, 21) are bounded, at least on one side, by upwardly sloping boundary surfaces (25).

5. A bicycle pump according to claim 3 or 4, characterized in that the construction is such, that as a result of the resilient deformation of the handle (16) by the pin (15) positioned near the centre of the handle (16) said handle (16) is pressed against the end of the hollow piston rod (11).

6. A bicycle pump according to any one of the preceding claims, characterized in that a cap (16') is provided on one end of the handle (16), said cap (16') in the second position of said handle (16) joining one end of the pump housing (9).

7. A bicycle pump according to claim 6, characterized in that said cap (16') is provided with a flange (16"), which in the second position of the handle (16) engages around the end of the pump housing (9).

## Patentansprüche

1. Fahrradpumpe (8) mit einem länglichen Pumpengehäuse (9), einem innerhalb des Pumpengehäuses (9) angeordneten Pumpenkolben (10), der an einer hohlen Kolbenstange (11) befestigt ist, und mit einem Handgriff (16) der mit der Kolbenstange (11) zusammenwirkt, wobei der Handgriff (16) so verstellbar mit der hohlen Kolbenstange (11) verbunden ist, daß sich der Handgriff (16) in einer ersten Betriebsposition der Pumpe (8) quer zu der hohlen Kolbenstange (11) nahe dem gegenüber dem Pumpenkolben (10) liegenden Ende der hohlen Kolbenstange (11) erstreckt und daß sich der Handgriff (16) in einer zweiten Betriebsposition koaxial zu der hohlen Kolbenstange (11) erstreckt, dadurch gekennzeichnet, daß der Handgriff (16) in der zweiten Position zumindest zu einem Teil seiner Länge innerhalb der hohlen Kolbenstange (11) angeordnet ist.

2. Fahrradpumpe nach Anspruch 1, dadurch gekennzeichnet, daß sich eine in Längsrichtung des Handgriffs (16) erstreckende Einkerbung (22, 23) im Handgriff (16) befindet, durch die ein mit dem oberen Ende der hohlen Kolbenstange (11) verbundener Stift (15) auf solche Art hindurch geführt ist, daß der Handgriff (16) mittels des Stifts (15) in seiner Längsrichtung beweglich mit der hohlen Kolbenstange (11) verbunden ist, während der Handgriff (16) in Bezug auf die Kolbenstange (11) um den Stift (15) herum gedreht werden kann, wenn sich der Stift (15) in der Nähe eines der Enden der Einkerbung (22, 23) befindet.

3. Fahrradpumpe nach Anspruch 2, dadurch gekennzeichnet, daß gegenüberliegende Rippen (20, 21) innerhalb der Einkerbung (22, 23) angebracht sind, wobei der Abstand zwischen den beiden Rippen (20, 21) allmählich zur Mitte des Handgriffs (16) hin abnimmt, während die Einkerbungen (22, 23) zur Aufnahme des Stifts (15) in den Rippen (20, 21) nahe der Mitte des Handgriffs (16) auf solche Art angebracht sind, daß bei Bewegung des Stifts (15) in Richtung der Mitte des Handgriffs (16) die Rippen (20, 21) ein wenig auseinandergedrückt werden.

4. Fahrradpumpe nach Anspruch 3, dadurch gekennzeichnet, daß die in den Rippen (20, 21) angebrachten Einkerbungen (22, 23) an mindestens einer Seite durch aufwärts ansteigende Grenzflächen (25) begrenzt werden.

5. Fahrradpumpe nach den Ansprüchen 3 oder 4, dadurch gekennzeichnet, daß durch die elastische Deformation des Handgriffs (16) mittels des in der Nähe der Mitte des Handgriffs (16) angebrachten Stifts (15) der Handgriff (16) gegen das Ende der hohlen Kolbenstange (11) gedrückt wird.

6. Fahrradpumpe nach einem der vorgenannten Ansprüche, dadurch gekennzeichnet, daß eine Kappe (16') auf einem Ende des Handgriffs (16) angebracht ist, wobei die Kappe (16') in der zweiten Betriebsposition des Handgriffs (16) mit einem Ende des Pumpengehäuses (9) in Kontakt kommt.

7. Fahrradpumpe nach Anspruch 6, dadurch gekennzeichnet, daß die Kappe (16') mit einem Flansch (16") versehen ist, der sich in der zweiten Betriebsposition des Handgriffs (16) um das Ende des Pumpengehäuses (9) herumlegt.

## Revendications

1. Pompe à bicyclette (8) munie d'un carter de pompe allongé (9), d'un piston de pompe (10) positionné à l'intérieur du carter de pompe (9), qui est fixé à une tige de piston creuse (11), et d'une poignée (16) coopérant avec ledit piston (11), ladite poignée (16) étant raccordée de manière réglable à la tige de piston creuse (11) de telle sorte que, dans une première position de fonctionnement de la pompe (8), ladite poignée (16) s'étend transversalement à la tige de piston creuse (11) près de l'extrémité de la tige de piston creuse (11) et loin du piston (10), et que dans une seconde position, ladite poignée (16) s'étend coaxialement à la tige de piston creuse (11), caractérisée en ce que dans ladite seconde position, ladite poignée (16) est logée à l'intérieur de la tige de piston creuse (11) au moins sur une partie de sa longueur.

2. Pompe à bicyclette selon la revendication 1, caractérisée en ce qu'un creux (22, 23) s'étendant dans la direction longitudinale de la poignée (16) est ménagé dans ladite poignée (16), creux à travers lequel on fait passer une broche (15) fixée à l'extrémité supérieure de ladite tige de piston creuse (11), de telle sorte que la poignée (16) est raccordée à la tige de piston (11) au moyen de ladite broche (15) afin d'être mobile dans sa direction longitudinale, tandis que la poignée (16) peut être pivotée autour de la broche (15) par rapport à la tige de piston (11) lorsque ladite broche (15) est située près d'une extrémité dudit creux (22, 23).

3. Pompe à bicyclette selon la revendication 2, caractérisée en ce que des nervures opposées (20, 21) sont ménagées à l'intérieur dudit creux (22, 23), la distance entre lesdites nervures (20, 21) diminuant progressivement vers le centre de ladite poignée (16), alors que les creux (22, 23) destinés à recevoir la broche (15) sont ménagés dans lesdites nervures (20, 21), près du centre de la poignée (16), la construction étant telle que lorsque la broche (15) est déplacée vers le centre de la poignée (16), lesdites nervures (20, 21) sont légèrement écartées de force.

4. Pompe à bicyclette selon la revendication 3, caractérisée en ce que les creux (22, 23) ménagés dans lesdites nervures (20, 21) sont limités, au moins sur un côté, par des surfaces de limitation (25) inclinées vers le haut.

5. Pompe à bicyclette selon la revendication 3 ou 4, caractérisée en ce que la construction est telle qu'en conséquence de la déformation élastique de la poignée (16) exercée par la tige (15) positionnée près du centre de la poignée (16), ladite poignée (16) est pressée contre l'extrémité de la tige de piston creuse (11).

6. Pompe à bicyclette selon l'une quelconque des revendications précédentes, caractérisée en ce qu'un capuchon (16') est prévu sur une extrémité de la poignée (16), ledit capuchon (16') joignant une extrémité du carter de pompe (9) dans la seconde position de ladite poignée (16).

7. Pompe à bicyclette selon la revendication 6, caractérisée en ce que ledit capuchon (16') est muni d'une bride (16"), laquelle, dans la seconde position de la poignée (16), vient en prise autour de l'extrémité du carter de pompe (9).
